# EUROPÄISCHE PATENTSCHRIFT

(11) **EP 1 554 099 B1**
(45) Veröffentlichungstag und Bekanntmachung des Hinweises auf die Patenterteilung: **01.02.2006**
(21) Anmeldenummer: 03750332.3
(22) Anmeldetag: 10.09.2003
(51) Int. Cl.: B29C 45/00, B29C 45/16, F02D 9/10, F16K 27/02

(54) **VERFAHREN ZUR HERSTELLUNG EINER DROSSELKLAPPE IN EINEM DURCHGEHENDEN DROSSELKLAPPENSTUTZEN**
METHOD FOR PRODUCTION OF A THROTTLE VALVE IN A CONTINUOUS THROTTLE VALVE CONNECTOR
PROCEDE POUR LA PRODUCTION D'UN PAPILLON DANS UN BOITIER DE PAPILLON TRAVERSANT

(30) Priorität: 07.10.2002 DE 10246726
(43) Veröffentlichungstag der Anmeldung: 20.07.2005
(73) Patentinhaber: SIEMENS AKTIENGESELLSCHAFT, 80333 München (DE)
(72) Erfinder: VOLZ, Peter, 65812 Bad Soden (DE)
(86) Internationale Anmeldenummer: PCT/DE2003/003004
(87) Internationale Veröffentlichungsnummer: WO 2004/033180

(56) Entgegenhaltungen:
- WO-A-97/04259
- DE-A- 19 918 777
- FR-A- 2 687 601
- PATENT ABSTRACTS OF JAPAN vol. 1999, no. 13, 30. November 1999 (1999-11-30) -& JP 11 229909 A (NISSAN MOTOR CO LTD), 24. August 1999 (1999-08-24)
- PATENT ABSTRACTS OF JAPAN vol. 2000, no. 01, 31. Januar 2000 (2000-01-31) -& JP 11 294203 A (NISSAN MOTOR CO LTD), 26. Oktober 1999 (1999-10-26)
- PATENT ABSTRACTS OF JAPAN vol. 2000, no. 26, 1. Juli 2002 (2002-07-01) -& JP 2001 263098 A (DENSO CORP), 26. September 2001 (2001-09-26)

## Beschreibung

Drosselklappen in Drosselklappenstutzen sind bekannt. In der DE 195 12 729 A1 wird ein Drosselklappenstutzen mit einem rohrartigen Gehäuse beschrieben, in dem eine Drosselklappe auf einer Drosselklappenwelle befestigt ist, die quer zur Längsachse des rohrartigen Gehäuses an ihren freien Enden durch Ausnehmungen in der Gehäusewand durchführend drehbar gelagert ist. Bei der Anordnung von Drosselklappen in Drosselklappenstutzen ist oftmals nachteilig, dass aufgrund von teilweise extrem kleinen Leckage-Vorgaben mit hoher Präzision und Oberflächengüte gearbeitet werden muss. Dabei müssen Gussmaterial, aus dem der Drosselklappenstutzen besteht und die Gussqualität einen hohen Qualitätsstandart haben. Die Drosselklappe wird dabei in der Regel aus einem Blech gestanzt und mit großem Präzisionsaufwand feinst gedreht, wobei sehr geringe Toleranzen eingehalten werden müssen.

Ein Verfahren gemäß dem Oberbegriff des Anspruches 1 ist aus der FR 2 687 601 A1 bekannt. Dort ergibt sich im Bereich des Wellendurchbruches ein kritischer Übergangsbereich zwischen Drosselklappe und Drosselklappenstutzen.

Aus der JP 11 229909 A ist ein Drosselklappenstutzen mit einem umlaufenden Vorsprung bekannt, während die DE 199 18 777 A1 das Umspritzen einer Welle mit Klappenflügeln für einen Schaltklappverband aufzeigt.

Der Erfindung liegt die Aufgabe zugrunde, ein Verfahren zur Herstellung einer Drosselklappe in einem durchgehenden Drosselklappenstutzen zu schaffen, bei dem auf einen Drehvorgang im engen Toleranzbereich verzichtet werden kann.

Die der Erfindung zugrunde liegende Aufgabe wird durch ein Verfahren zur Herstellung einer Drosselklappe in einem durchgehenden Drosselklappenstutzen mit den Merkmalen des Anspruches 1 gelöst. Zunächst wird ein Drosselklappenstutzen aus dem ersten Kunststoff eingesetzt, der innen einen zur Mitte des Drosselklappenstutzens verlaufenden, umlaufenden Vorsprung aufweist. Anschließend wird eine Drosselklappenwelle senkrecht zur Längsachse des Drosselklappenstutzens über die Durchbrüche durch den Drosselklappenstutzen und den Kunststoffeinsatz eingebracht, die in den Durchbrüchen jeweils durch einen ersten hohlen Stopfen und einen zweiten hohlen Stopfen gelagert wird, mit denen die Durchbrüche des Drosselklappenstutzens komplementär zum Kunststoffeinsatz verschlossen werden, und von beiden Seiten werden ein erster Stempel und ein zweiter Stempel in den Drosselklappenstutzen eingefahren, die zwischen ihnen beiden und dem gebildeten, zur Mitte des Drosselklappenstutzens verlaufenden, umlaufenden Vorsprung des Kunststoffeinsatzes einen, die Drosselklappenwelle umfassenden, zweiten Hohlraum in Form der Drosselklappe bilden, anschließend wird in einem weiteren Schritt ein aufgeschmolzener zweiter Kunststoff durch den ersten Stempel in den zweiten Hohlraum eingeben und dort zur Aushärtung und Bildung der Drosselklappe gebracht, anschließend werden in einem noch weiteren Schritt der erste Stempel und der zweite Stempel aus dem Drosselklappenstutzen entfernt. Der erste Kunststoff wird durch mindestens einen Durchbruch in den ersten Hohlraum eingegeben. Dies bedeutet, dass in jedem Fall zwei Durchbrüche vorhanden sind, wobei jedoch nur ein Durchbruch als Zuleitung für den ersten Kunststoff dienen muss. Es ist jedoch auch möglich, den ersten Kunststoff durch beide Durchbrüche in den ersten Hohlraum einzugeben. Bei der Aushärtung des zweiten Kunststoffs kommt es zwangsläufig zur Verbindung der Drosselklappe mit der Drosselklappenwelle. Dies erfolgt durch ein Schrumpfen des zweiten Kunststoffes während der Abkühlphase. Die Drosselklappenwelle wird in den Durchbrüchen jeweils durch einen ersten hohlen Stopfen und einen zweiten hohlen Stopfen gelagert, die beispielsweise in Form von einseitig abgeschlossenen Rohrstücken gestaltet sind. Sie bestehen in der Regel aus Stahl. Eine bevorzugte Weiterbildung des Verfahrens sieht vor, daß in einem ersten Schritt im Drosselklappenstutzen eine umlaufende, ringförmige Nut eingearbeitet wird, anschließend in einem zweiten Schritt von beiden Seiten ein dritter Stempel und ein vierter Stempel in den Drosselklappenstutzen eingefahren werden, die zueinander komplementär gestaltet sind und im eingefahrenen Zustand im Bereich der ringförmigen Nut einen zylindrischen ersten Hohlraum bilden, der zur Mitte des Drosselklappenstutzens einen umlaufenden Vorsprung aufweist, anschließend in einem dritten Schritt seitlich durch mindestens einen Durchbruch des Drosselklappenstutzens ein aufgeschmolzener erster Kunststoff in den ersten Hohlraum eingegeben wird und dort zur Aushärtung und Bildung eines Kunststoffeinsatzes gebracht wird, anschließend in einem vierten Schritt der dritte Stempel und der vierte Stempel aus dem Drosselklappenstutzen entfernt werden. Der Drosselklappenstutzen kann beispielsweise aus Aludruckguss bestehen. Die im Drosselklappenstutzen eingearbeitete, umlaufende, ringförmige Nut kann einseitig oder zweiseitig parallel zur Längsachse des Drosselklappenstutzens begrenzt sein. Der erste Stempel, der zweite Stempel, der dritte sowie der vierte Stempel bestehen aus Stahl. Der dritte Stempel und der vierte Stempel sind zueinander komplementär gestaltet. Das bedeutet, sie wirken funktionell zusammen und bilden gemeinsam den zylindrischen Hohlraum, wobei der umlaufende Vorsprung dieses zylindrischen Hohlraumes durch ihre, im eingefahrenen Zustand, anliegenden Stirnflächen durch dortige Materialwegnahme gebildet wird. Dieser umlaufende Vorsprung kann ringförmig sein. Der erste Kunststoff unterscheidet sich vom zweiten Kunststoff durch sein Schrumpfvermögen während der Abkühlungsphase. Dadurch wird erreicht, dass sich zwischen der hergestellten Drosselklappe und dem Kunststoffeinsatz ein geringfügiger Spalt bildet, so dass die Drosselklappe sich nicht mit dem Kunststoffeinsatz verbinden kann. Im vierten Schritt werden die Durchbrüche des Drosselklappenstutzens komplementär zum Kunststoffeinsatz verschlossen. Dies erfolgt durch das Einführen des ersten hohlen Stopfens und des zweiten hohlen Stopfens in die Durchbrüche. Dadurch wird gleichzeitig eine Abgrenzung zu dem zur Mitte des Drosselklappenstutzens verlaufenden, umlaufenden Vorsprung des Kunststoffeinsatzes erzielt, der an der Stelle der Durchbrüche nicht mehr vorhanden ist. Die Eingabe des zweiten Kunststoffs in den Drosselklappenstutzen erfolgt in der Regel über eine mittig durch den ersten Stempel verlaufende Bohrung.

Es hat sich in überraschender Weise gezeigt, dass bei dem Verfahren zur Herstellung einer Drosselklappe in einem durchgehenden Drosselklappenstutzen keinerlei Drehvorgänge erforderlich sind, bei denen die Einstellung von geringen Toleranzen erfolgt. Das technische Zusammenspiel zwischen Drosselklappe und Kunststoffeinsatz im Drosselklappenstutzen wird alleine durch die Spritzvorgänge im durchgehenden Drosselklappenstutzen realisiert, so dass aufwendige Nachbearbeitungsschritte entfallen können.

Eine bevorzugte Ausgestaltung der Erfindung besteht darin, dass der umlaufende Vorsprung des Kunststoffeinsatzes nicht durchgehend im gleichen Abstand zu den Kanten des Kunststoffeinsatzes gebildet wird und der maximale Winkel α zwischen der Senkrechten zur Längsachse des Drosselklappenstutzens und der direkten Verbindung zweier direkt einander gegenüberliegender Bereiche des umlaufenden Vorsprungs dabei zwischen 7° und 8° liegt. Auf diese Weise wird die in der Regel gewünschte schräge Position der Drosselklappe im durchgehenden Drosselklappenstutzen auf einfache Weise erreicht. Die Stirnflächen des dritten Stempels und des vierten Stempels sind dabei komplementär schräg verlaufend ausgebildet.

Gemäß einer weiteren bevorzugten Ausgestaltung der Erfindung werden als erster Kunststoff und als zweiter Kunststoff Polyphenylensulfide (PPS) mit unterschiedlichen linearen Ausdehnungskoeffizienten eingesetzt. Diese Polyphenylensulfide eignen sich in besonderem Maße aufgrund ihres Schrumpfverhaltens zur Herstellung der Drosselklappe.

Nach einer weiteren Ausgestaltung der Erfindung ist vorgesehen, dass als erster Kunststoff ein Polyphenylensulfid (PPS) mit einem linearen Ausdehnungskoeffizienten zwischen 90 und 250 °C von 36 · 10⁻⁶ und als zweiter Kunststoff ein Polyphenylensulfid (PPS) mit einem linearen Ausdehnungskoeffizienten zwischen 90 und 250 °C von 46·10⁻⁶ eingesetzt wird. Für den Einsatzzweck sind diese beiden Kunststoffarten in besonders vorteilhafter Weise geeignet.

Eine weitere bevorzugte Ausgestaltung der Erfindung besteht darin, dass eine Drosselklappenwelle eingebracht wird, die im Bereich der Drosselklappe einen verjüngten Querschnitt aufweist. In vorteilhafter Weise entspricht dabei die Verjüngung der Dicke des zweiten Kunststoffes auf der Drosselklappenwelle, so dass diese bündig mit dem eigentlichen Durchmesser der Drosselklappenwelle abschließt. Ein größeres Überstehen der Drosselklappenwelle über den eigentlichen Durchmesser der Drosselklappenwelle wird dadurch in vorteilhafter Weise vermieden. Ferner wird sichergestellt, dass die Anordnung der Drosselklappe an der Drosselklappenwelle lediglich mit einem relativ geringen Platzbedarf verbunden ist.

Gemäß einer weiteren bevorzugten Ausgestaltung der Erfindung wird eine Drosselklappenwelle eingebracht, die im Bereich der Drosselklappe Bearbeitungen zur formschlüssigen Fixierung des zweiten Kunststoffes aufweist. Bei diesen Bearbeitungen kann es sich beispielsweise um Aufrauungen, Vorsprünge, Außengewinde oder Nuten handeln, in die der zweite Kunststoff eingebracht wird und dort zur Aushärtung gelangt. Durch diese formschlüssige Fixierung wird die Verbindung zwischen der Drosselklappe und der Drosselklappenwelle verstärkt.

Nach einer weiteren Ausgestaltung der Erfindung werden als Bearbeitungen Bohrungen angeordnet. Dabei ist es besonders vorteilhaft, zwei nebeneinander angeordnete, durchgehende Bohrungen an der Drosselklappenwelle vorzusehen, in die der aufgeschmolzene zweite Kunststoff beim Einspritzen eindringen kann und dort ebenfalls zur Aushärtung gelangt, was die Stabilität der Verbindung zwischen der Drosselklappe und der Drosselklappenwelle merklich verbessert.

Die Erfindung wird nachfolgend anhand der Zeichnung (Fig. 1 bis Fig. 7, 9a), b)) näher und beispielhaft erläutert.
- Fig. 1: zeigt den Drosselklappenstutzen mit dem gebildeten zylindrischen Hohlraum im Querschnitt.
- Fig. 2: zeigt den Drosselklappenstutzen mit dem gebildeten Kunststoffeinsatz im Querschnitt.
- Fig. 3: zeigt die dreidimensional Darstellung eines Kunststoffeinsatzes zusammen mit der Drosselklappe.
- Fig. 4: zeigt die dreidimensionale Darstellung des dritten Stempels und des vierten Stempels im fast eingefahrenen Zustand im Drosselklappenstutzen.
- Fig. 5: zeigt eine Explosionsdarstellung gem. Fig. 4.
- Fig. 6: zeigt eine dreidimensionale Darstellung des ersten und des zweiten Stempels im Drosselklappenstutzen im eingefahrenen Zustand.
- Fig. 7: zeigt eine Explosionsdarstellung der Anordnung gem. Fig. 6 mit der Drosselklappenwelle und dem ersten hohlen Stopfen sowie dem zweiten hohlen Stopfen.
- Fig. 8: zeigt die dreidimensionale Darstellung des Drosselklappenstutzens zusammen mit der auf der Drosselklappenwelle fixierten Drosselklappe.
- Fig. 9a), b): zeigt die Draufsicht auf den Kunststoffeinsatz sowie den Kunststoffeinsatz im Querschnitt gem. Schnitt A - A.

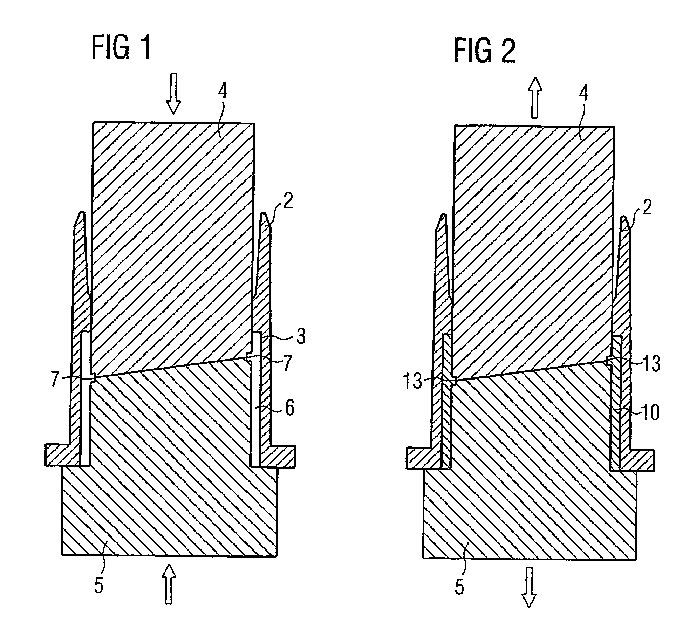

In Fig. 1 sind der Drosselklappenstutzen 2, der dritte Stempel 4 und der vierte Stempel 5, die bereits in den Drosselklappenstutzen 2 in Pfeilrichtung vollständig eingefahren sind, im Querschnitt dargestellt. Fig. 1 zeigt somit den zweiten Schritt des Verfahrens. Der dritte Stempel 4 und der vierte Stempel 5 sind komplementär gestaltet. Das bedeutet, dass ihre Stirnflächen im eingefahrenen Zustand aneinander passend anliegen. Der Drosselklappenstutzen 2 weist eine umlaufende, ringförmige Nut 3 auf, die einseitig durch den Drosselklappenstutzen 2 parallel zur Längsachse des Drosselklappenstutzens 2 begrenzt ist. Der dritte Stempel 4 und der vierte Stempel 5 bilden im Bereich der ringförmigen Nut 3 einen zylindrischen ersten Hohlraum 6, in den im anschließenden dritten Schritt seitlich durch mindestens einen Durchbruch (nicht dargestellt) des Drosselklappenstutzens 2 ein aufgeschmolzener erster Kunststoff eingegeben wird. Dieser füllt dann den zylindrischen ersten Hohlraum 6, der zur Mitte des Drosselklappenstutzens 2 einen umlaufenden Vorsprung 7 aufweist, vollständig aus.

In Fig. 2 ist der Drosselklappenstutzen 2 mit dem dritten Stempel 4 und dem vierten Stempel 5 im Querschnitt dargestellt. Fig. 2 zeigt dabei den dritten Schritt des Verfahrens. Der erste Kunststoff ist bereits in den ersten Hohlraum (nicht dargestellt) eingegeben und dort zur Aushärtung gebracht worden, wobei ein Kunststoffeinsatz 10 gebildet wird. Nach seiner Aushärtung werden der dritte Stempel 4 und der vierte Stempel 5 aus dem Drosselklappenstutzen 2 in Pfeilrichtung entfernt. Der Kunststoffeinsatz 10 verbleibt dann im Drosselklappenstutzen 2 und weist einen zur Mitte des Drosselklappenstutzens 2 verlaufenden, umlaufenden Vorsprung 13 auf.

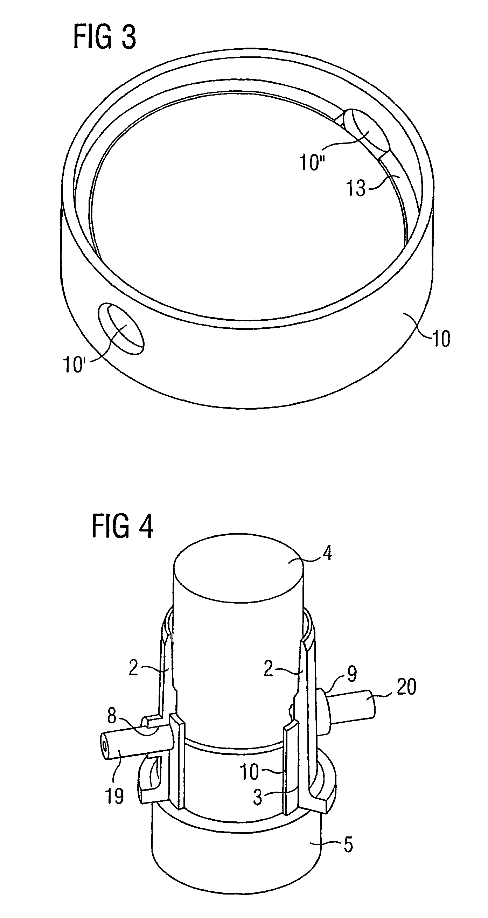

In Fig. 3 ist ein Kunststoffeinsatz 10 mit dem umlaufenden Vorsprung 13 zusammen mit der Drosselklappe 1 vereinfacht dargestellt. Der Kunststoffeinsatz 10 weist eine erste Öffnung 10' sowie eine zweite Öffnung 20" auf, die vor dem zweiten Spritzvorgang zur Bildung der Drosselklappe (nicht dargestellt) komplementär zum Kunststoffeinsatz verschlossen werden. Dies bedeutet, dass an den Stellen der ersten Öffnung 10' und der zweiten Öffnung 10" der dort nicht vorhandene umlaufende Vorsprung 13 durch den ersten hohlen Stopfen und den zweiten hohlen Stopfen (nicht dargestellt) ergänzt wird.

In Fig. 4 sind der dritte Stempel 4 und der vierte Stempel 5 im Drosselklappenstutzen 2 in fast eingefahrenem Zustand dreidimensional dargestellt. Der Drosselklappenstutzen 2 weist zwei Durchbrüche 8, 9 auf, durch welche eine erste Zufuhr 19 und eine zweite Zufuhr 20 für den ersten Kunststoff eingefahren sind. Sie dienen gleichzeitig zur Entlüftung des zylindrischen ersten Hohlraums 6 (nicht dargestellt) beim ersten Spritzvorgang. Nachdem der dritte Stempel 4 und der vierte Stempel 5 in den Drosselklappenstutzen 2 eingefahren wurden, wird der erste Kunststoff über die erste Zufuhr 19 oder über die zweite Zufuhr 20 zur Bildung des Kunststoffeinsatzes 10 eingebracht. Nach Aushärtung des Kunststoffeinsatzes 10 werden der dritte Stempel 4 und der vierte Stempel 5 wieder aus dem Drosselklappenstutzen 2 entfernt.

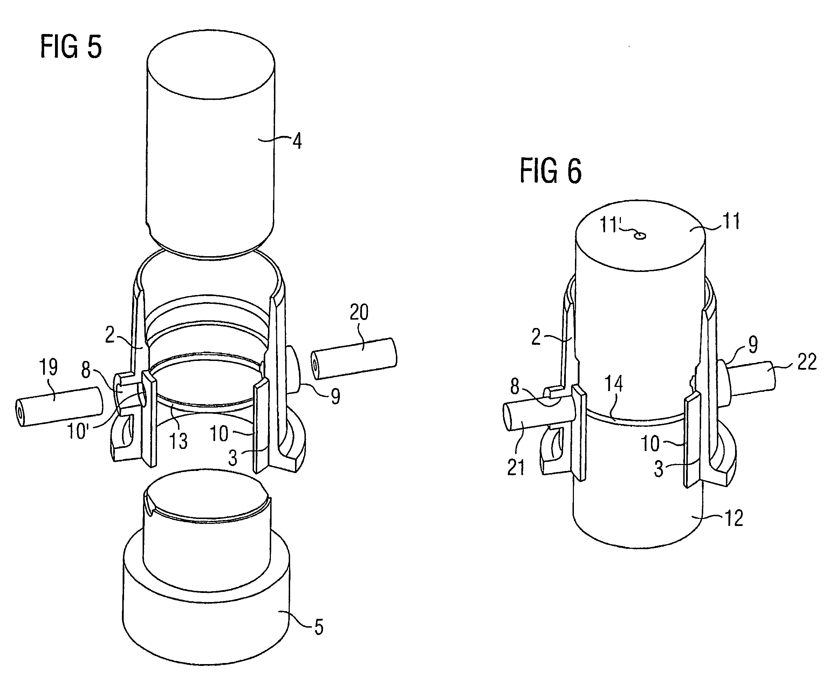

In Fig. 5 ist eine Explosionsdarstellung gemäß Fig. 4 dargestellt. Dabei ist lediglich der umlaufende Vorsprung 13 des Kunststoffeinsatzes 10 durchgehend verlaufend dargestellt worden.

In Fig. 6 ist der Drosselklappenstutzen 2 zusammen mit dem ersten Stempel 11 und dem zweiten Stempel 12 im eingefahrenen Zustand dreidimensional dargestellt. Die erste Zufuhr und die zweite Zufuhr für den ersten Kunststoff (nicht dargestellt) sind inzwischen aus der Vorrichtung herausgefahren worden und wurden durch einen ersten hohlen Stopfen 21 und einen zweiten hohlen Stopfen 22 ersetzt, die die Durchbrüche 8, 9 des Drosselklappenstutzens 2 komplementär zum Kunststoffeinsatz 10 verschließen. Zwischen ihnen ist die Drosselklappenwelle (nicht dargestellt) angeordnet. Zwischen dem ersten Stempel 11 und dem zweiten Stempel 12 und dem gebildeten, zur Mitte des Drosselklappenstutzens 2 verlaufenden, umlaufenden Vorsprungs (nicht dargestellt) des Kunststoffeinsatzes 10 wird ein, die Drosselklappenwelle 15 umfassender, zweiter Hohlraum 14 in Form der Drosselklappe (nicht dargestellt) gebildet. Anschließend wird in dem fünften Schritt ein aufgeschmolzener zweiter Kunststoff durch den ersten Stempel 11 in den zweiten Hohlraum 14 eingegeben und dort zur Aushärtung und Bildung der Drosselklappe 1 gebracht. Die Eingabe des zweiten Kunststoffs in das Innere des Drosselklappenstutzens 2 erfolgt dabei durch eine mittig im ersten Stempel 11 angeordnete durchgehende Bohrung 11'. Nach Aushärtung der Drosselklappe (nicht dargestellt) werden der erste Stempel 11 und der zweite Stempel 12 aus dem Drosselklappenstutzen 2 wieder herausgefahren.

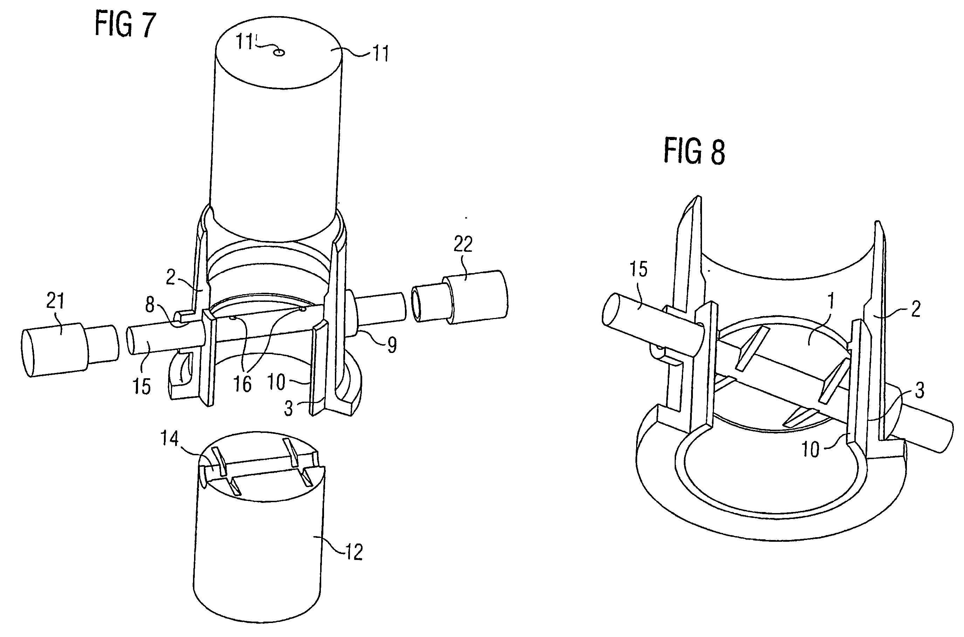

In Fig. 7 ist eine Explosionszeichnung gemäß Fig. 6 dargestellt. Durch die Durchbrüche 8, 9 wurde die Drosselklappenwelle 15 geführt, die im Bereich der Drosselklappe (nicht dargestellt) einen verjüngten Querschnitt aufweist. In diesem Bereich sind Bearbeitungen zur formschlüssigen Fixierung des zweiten Kunststoffes in Form von Bohrungen 16 angeordnet. Die Drosselklappenwelle 15 wird in den Durchbrüchen 8, 9 jeweils durch einen ersten hohlen Stopfen 21 und durch einen zweiten hohlen Stopfen 22 gelagert, mit denen die Durchbrüche 8, 9 des Drosselklappenstutzens 2 komplementär zum Kunststoffeinsatz verschlossen werden.

In Fig. 8 ist der Drosselklappenstutzen 2 mit Blick auf die Drosselklappe 1 dreidimensional dargestellt. Die Drosselklappe 1 befindet sich bereits auf der Drosselklappenwelle 15.

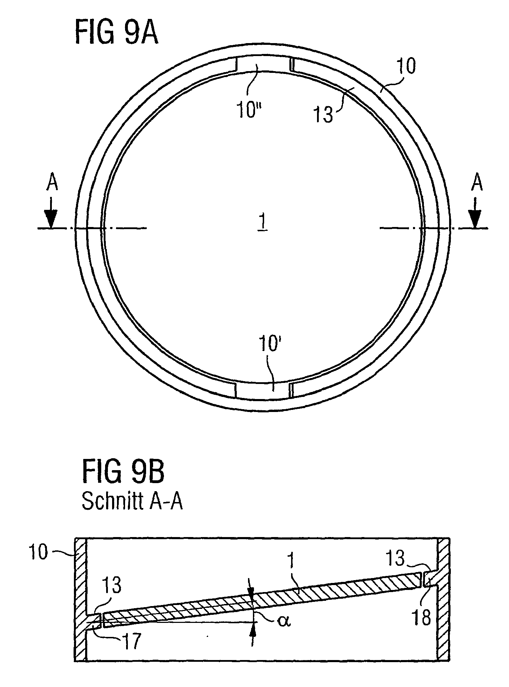

In Fig. 9a), b) ist die Draufsicht des Kunststoffeinsatzes 10 mit der Drosselklappe 1 sowie der Querschnitt gemäß Schnitt A - A schematisch und vereinfacht dargestellt. Der umlaufende Vorsprung 13 des Kunststoffeinsatzes 10 weist dabei nicht durchgehend den gleichen Abstand zu den Kanten des Kunststoffeinsatzes 10 auf. Der maximale Winkel α zwischen der Senkrechten zur Längsachse des Drosselklappenstutzens 2 (nicht dargestellt) und der direkten Verbindung zweier direkt einander gegenüberliegender Bereiche 17, 18 des umlaufenden Vorsprunges 13 liegt zwischen 7° und 8°. Dies entspricht in der Regel der gewünschten Neigung der Drosselklappe 1 im Drosselklappenstutzen. Auf die Bildung des Kunststoffeinsatzes 10 kann dann in besonders vorteilhafter Weise verzichtet werden, sofern der Drosselklappenstutzen (nicht dargestellt) aus dem ersten Kunststoff gefertigt ist und in entsprechender Weise einen umlaufenden Vorsprung 13 aufweist.

## Patentansprüche

1. Verfahren zur Herstellung einer Drosselklappe (1) in einem durchgehenden wenigstens teilweise aus einem ersten Kunststoff gefertigten Drosselklappenstutzen (2) mit wenigstens einem Durchbruch (8, 9), bei welchem in einem Verfahrensschritt eine Drosselklappenwelle (15) senkrecht zur Längsachse des Drosselklappenstutzens (2) über die Durchbrüche (8, 9) durch den Drosselklappenstutzen (2) und den Kunststoffeinsatz (10) eingebracht wird, die in den Durchbrüchen (8, 9) jeweils durch einen ersten hohlen Stopfen (21) und einen zweiten hohlen Stopfen (22) gelagert wird, mit denen die Durchbrüche (8, 9) des Drosselklappenstutzens (2) verschlossen werden, von beiden Seiten ein erster Stempel (11) und ein zweiter Stempel (12) in den Drosselklappenstutzen (2) eingefahren werden, die zwischen ihnen beiden einen die Drosselklappenwelle (15) umfassenden Hohlraum (14) in Form der Drosselklappe (1) bilden, anschließend in einem weiteren Schritt ein aufgeschmolzener zweiter Kunststoff durch den ersten Stempel (11) in den Hohlraum (14) in Form der Drosselklappe eingegeben wird und dort zur Bildung der Drosselklappe (1) zur Aushärtung gebracht wird, und anschließend in einem weiteren Schritt der erste Stempel (11) und der zweite Stempel (12) aus dem Drosselklappenstutzen (2) entfernt werden, **dadurch gekennzeichnet, daß** der Drosselklappenstutzen (2) zu seiner Mitte einen umlaufenden Vorsprung (13)aufweist, wobei der Hohlraum (14) in Form der Drosselklappe zwischen dem Vorsprung (14) und dem ersten Stempel (11) sowie dem zweiten Stempel (12) gebildet ist und vor dem Eingeben des aufgeschmolzenen zweiten Kunststoffes die Durchbrüche (8, 9) mit den Stopfen (21, 22) komplementär zum Drosselklappenstutzen (2) verschlossen werden und der umlaufende Vorsprung (10) durch die Stopfen (21, 22) ergänzt wird.

2. Verfahren nach Anspruch 1, bei dem in einem vorangehenden ersten Verfahrensschritt im Drosselklappenstutzen (2) eine umlaufende, ringförmige Nut (3) eingearbeitet wird, anschließend in einem zweiten Schritt von beiden Seiten ein dritter Stempel (4) und ein vierter Stempel (5) in den Drosselklappenstutzen (2) eingefahren werden, die zueinander komplementär gestaltet sind und im eingefahrenen Zustand im Bereich der ringförmigen Nut (3) einen zylindrischen ersten Hohlraum (6) bilden, der zur Mitte des Drosselklappenstutzens (2) einen umlaufenden Vorsprung (7) aufweist, anschließend seitlich durch den mindestens einen Durchbruch (8, 9) des Drosselklappenstutzens (2) der erste Kunststoff in den ersten Hohlraum (6) eingegeben wird und dort zur Aushärtung und Bildung eines Kunststoffeinsatzes (10) mit dem zur Mitte des Drosselklappenstutzens (2) verlaufenden, umlaufenden Vorsprung (13) gebracht wird, und anschließend der dritte Stempel (4) und der vierte Stempel (5) aus dem Drosselklappenstutzen (2) entfernt werden.

3. Verfahren nach Anspruch 1 oder 2, bei dem der umlaufende Vorsprung (13) des Kunststoffeinsatzes (10) nicht durchgehend im gleichen Abstand zu den Kanten des Kunststoffeinsatzes (10) gebildet wird und der maximale Winkel α zwischen der Senkrechten zur Längsachse des Drosselklappenstutzens (2) und der direkten Verbindung zweier direkt einander gegenüberliegender Bereiche (17, 18) des umlaufenden Vorsprunges (13) dabei zwischen 7° und 8° liegt.

4. Verfahren nach einem der Ansprüche 1 bis 3, bei dem als erster Kunststoff und als zweiter Kunststoff Polyphenylensulfide (PPS) mit unterschiedlichen linearen Ausdehnungskoeffizienten eingesetzt werden.

5. Verfahren nach Anspruch 4, bei dem als erster Kunststoff ein Polyphenylensulfid (PPS) mit einem linearen Ausdehnungskoeffizienten zwischen 90 und 250 °C von 36·10⁻⁶ und als zweiter Kunststoff ein Polyphenylensulfid (PPS) mit einem linearen Ausdehnungskoeffizienten zwischen 90 und 250 °C von 46·10⁻⁶ eingesetzt wird.

6. Verfahren nach einem der Ansprüche 1 bis 5, bei dem eine Drosselklappenwelle (15) eingebracht wird, die im Bereich der Drosselklappe (1) einen verjüngten Querschnitt aufweist.

7. Verfahren nach einem der Ansprüche 1 bis 6, bei dem eine Drosselklappenwelle (15) eingebracht wird, die im Bereich der Drosselklappe (1) Bearbeitungen zur formschlüssigen Fixierung des zweiten Kunststoffes aufweist.

8. Verfahren nach Anspruch 7, bei dem als Bearbeitungen Bohrungen (16) angeordnet werden.

## Claims

1. Method for producing a throttle valve (1) in a continuous throttle valve body (2) made at least partially from a first plastic, with at least one aperture (8, 9), in which, in one method step, a throttle valve shaft (15) is introduced perpendicularly to the longitudinal axis of the throttle valve body (2) via the apertures (8, 9) through the throttle valve body (2) and the plastic insert (10), which shaft is mounted in the apertures (8, 9) respectively by a first hollow plug (21) and a second hollow plug (22), with which the apertures (8, 9) of the throttle valve body (2) are closed, a first die (11) and a second die (12) are made to enter the throttle valve body (2) from both sides, the two dies forming between them a cavity (14), in the shape of the throttle valve (1), enclosing the throttle valve shaft (15), subsequently, in a second step, a molten second plastic is introduced by the first die (11) into the cavity (14) in the shape of the throttle valve and is made to cure there for the formation of the throttle valve (1), and subsequently, in a further step, the first die (11) and the second die (12) are removed from the throttle valve body (2), **characterized in that** the throttle valve body (2) has towards its centre a peripheral projection (13), the cavity (14) in the shape of the throttle valve being formed between the projection (14) and the first die (11) and the second die (12) and the apertures (8, 9) being closed by the plugs (21, 22), in a manner complementary to the throttle valve body (2), before the introduction of the molten second plastic, and the peripheral projection (10) being supplemented by the plugs (21, 22).

2. Method according to Claim 1, in which, in a preceding first method step, a peripheral, annular groove (3) is machined in the throttle valve body (2), subsequently, in a second step, a third die (4) and a fourth die (5) are made to enter the throttle valve body (2) from both sides, which dies are formed in a manner complementing each other and in the entered state form in the region of the annular groove (3) a cylindrical first cavity (6), which has a peripheral projection (7) towards the centre of the throttle valve body (2), the first plastic is subsequently introduced into the first cavity (6) laterally through the at least one aperture (8, 9) of the throttle valve body (2) and is made to cure there and form a plastic insert (10) with the peripheral projection (13), running to the centre of the throttle valve body (2), and subsequently the third die (4) and the fourth die (5) are removed from the throttle valve body (2).

3. Method according to Claim 1 or 2, in which the peripheral projection (13) of the plastic insert (10) is not formed continuously at the same distance from the edges of the plastic insert (10) and the maximum angle α between the perpendicular to the longitudinal axis of the throttle valve body (2) and the direct connection of two regions (17, 18) directly opposite each other of the peripheral projection (13) in this case lies between 7° and 8°.

4. Method according to one of Claims 1 to 3, in which polyphenylene sulphides (PPS) with different coefficients of linear expansion are used as the first plastic and the second plastic.

5. Method according to Claim 4, in which a polyphenylene sulphide (PPS) with a coefficient of linear expansion between 90 and 250°C of 36·10⁻⁶ is used as the first plastic and a polyphenylene sulphide (PPS) with a coefficient of linear expansion between 90 and 250°C of 46·10⁻⁶ is used as the second plastic.

6. Method according to one of Claims 1 to 5, in which a throttle valve shaft (15) which has a tapered cross section in the region of the throttle valve (1) is introduced.

7. Method according to one of Claims 1 to 6, in which a throttle valve shaft (15) which has machined formations for fixing the second plastic with positive engagement in the region of the throttle valve (1) is introduced.

8. Method according to Claim 7, in which bores (16) are arranged as machined formations.

## Revendications

1. Procédé permettant de fabriquer un papillon de régulation des gaz (1) dans une tubulure (2) à papillon de régulation des gaz d'un seul tenant fabriquée au moins partiellement à partir d'une première matière plastique et ayant au moins un trou (8, 9), au cours duquel, en une première étape de fabrication, on met en place, perpendiculairement à l'axe longitudinal de la tubulure (2) à papillon de régulation des gaz et à travers les trous (8, 9) ménagés à travers la tubulure (2) à papillon de régulation des gaz et l'insert (10) en matière plastique, un arbre (15) de papillon de régulation des gaz qui repose de chaque côté dans les trous (8, 9) ménagés à travers un premier bouchon creux (21) et un deuxième bouchon creux (22), avec lesquels les trous (8, 9) de la tubulure (2) à papillon de régulation des gaz sont fermés et, des deux cotés, on engage dans la tubulure (2) à papillon de régulation des gaz un premier tampon (11) et un deuxième tampon (12) qui forment entre eux un espace vide (14) entourant l'arbre (15) du papillon de régulation des gaz et ayant la forme du papillon de régulation des gaz (1), ensuite, au cours d'une autre étape, on introduit, dans l'espace vide (14) ayant la forme du papillon de régulation des gaz (1), une deuxième matière plastique en fusion à travers le premier tampon (11) et, là, on la laisse se solidifier en formant le papillon de régulation des gaz (1), et ensuite, au cours d'une autre étape, on enlève de la tubulure (2) à papillon de régulation des gaz le premier tampon (11) et le deuxième tampon (12), **caractérisé par le fait que** la tubulure (2) à papillon de régulation des gaz comporte une saillie périphérique (13) dirigée vers le milieu de la tubulure (2) à papillon de régulation des gaz, l'espace vide (14) ayant la forme du papillon de régulation des gaz (1) étant formé entre la saillie (13) et le premier tampon (11), ainsi que le deuxième tampon (12) et les trous (8, 9) étant, avant l'introduction de la deuxième matière plastique en fusion, fermés, d'une façon complémentaire à la tubulure (2) à papillon de régulation des gaz, par les bouchons (21, 22) et la saillie périphérique (13) étant complétée par les bouchons (21, 22).

2. Procédé selon la revendication 1 au cours duquel, en une première étape préliminaire de fabrication, une rainure annulaire et périphérique (3) est ménagée dans la tubulure (2) à papillon de régulation des gaz, qu'ensuite, au cours d'une deuxième étape, à partir des deux côtés, un troisième tampon (4) et un quatrième tampon (5) sont engagés dans la tubulure (2) à papillon de régulation des gaz, ces tampons étant complémentaires l'un par rapport à l'autre et formant, dans leur position introduite, dans la zone de la rainure annulaire (3), un premier espace vide cylindrique (6) comportant, dans la direction du milieu de la tubulure (2) à papillon de régulation des gaz, une saillie périphérique (7), ensuite la première matière plastique en fusion est introduite latéralement dans le premier espace vide (6) à travers au moins un trou (8, 9) de la tubulure (2) à papillon de régulation des gaz et, là, on la laisse se solidifier en formant un insert (10) en matière plastique comportant la saillie périphérique (13) s'étendant vers le milieu de la tubulure (2) à papillon de régulation des gaz, et ensuite on enlève le troisième tampon (4) et le quatrième tampon (5) de la tubulure (2) à papillon de régulation des gaz.

3. Procédé selon la revendication 1 ou 2 au cours duquel la saillie périphérique (13) de l'insert (10) en matière plastique n'est pas formée d'une façon continue à la même distance des arêtes de l'insert (10) en matière plastique et, dans ce contexte, l'angle maximum α entre la perpendiculaire à l'axe longitudinal de la tubulure (2) à papillon de régulation des gaz et la liaison directe de deux zones (17, 18) de la saillie périphérique (13) se faisant directement face a une valeur comprise entre 7° et 8°.

4. Procédé selon l'une des revendications 1 à 3 au cours duquel on utilise, comme première matière plastique et comme deuxième matière plastique, des polysulfures de phénylène (PPS) ayant des coefficients linéaires de dilatation différents.

5. Procédé selon la revendication 4 dans lequel on utilise, comme première matière plastique, un polysulfure de phénylène (PPS) ayant, entre 90 et 250 °C, un coefficient linéaire de dilatation de 36.10⁻⁶ et, comme deuxième matière plastique, un polysulfure de phénylène (PPS) ayant, entre 90 et 250 °C, un coefficient linéaire de dilatation de 46.10⁻⁶.

6. Procédé selon l'une des revendications 1 à 5 au cours duquel on introduit un arbre (15) de papillon de régulation des gaz ayant, dans la zone du papillon (1) de régulation des gaz, une section transversale réduite.

7. Procédé selon l'une des revendications 1 à 6 au cours duquel on introduit un arbre (15) de papillon de régulation des gaz ayant, dans la zone du papillon (1) de régulation des gaz, des usinages destinés à la fixation par assemblage géométrique de la deuxième matière plastique.

8. Procédé selon la revendication 7 dans lequel, en tant qu'usinages, sont ménagés des alésages.
